# EUROPEAN PATENT APPLICATION

(11) **EP 2 658 274 A1**
(43) Date of publication of application: **30.10.2013**
(21) Application number: 13158752.9
(22) Date of filing: 12.03.2013
(51) Int. Cl.: H04N 21/436, H04N 21/4363

(54) **Information processing apparatus, information processing method, and program**

(30) Priority: 24.04.2012 JP 2012099215
(71) Applicant: Sony Corporation, Tokyo 108-0075 (JP)
(72) Inventor: Sato, Naoyuki, TOKYO, Tokyo 108-0075 (JP); Niitsuma, Takayuki, TOKYO, Tokyo 108-0075 (JP)
(74) Representative: Körber, Martin Hans

(57) **Abstract**

An information processing apparatus includes: a first output terminal connected to a first control bus capable of bi-directionally transmitting a control signal; a second output terminal connected to a second control bus capable of bi-directionally transmitting the control signal, the first and second output terminals being configured to output baseband video and audio signals; and a controller configured to execute a separation output mode in which the video signal is output from the first terminal and the audio signal is output from the second terminal, to exclusively control valid and invalid states of the first and second buses, and in a case where a user instructs an execution of the separation output mode, to transmit a first control signal to a first device in a valid state of the first bus and transmit a second control signal to a second device in a valid state of the second bus.

## Description

### Background

The present disclosure relates to an information processing apparatus capable of outputting a video signal and an audio signal from different output terminals, and to an information processing method and a program for the information processing apparatus.

The HDMI (High-Definition Multimedia Interface) has become widespread as a communication interface for high-speed transmission of a baseband (uncompressed) video signal and an audio signal associated with the video signal.

In recent years, the following device has also been developed. The device includes two HDMI output terminals and separately outputs a video signal and an audio signal through the two output terminals, with the result that a high-quality image and a high-quality sound can be achieved.

For example, Japanese Patent Application Laid-open No. 2007-258867 discloses an AV (audiovisual) source apparatus that instructs a visual HDMI transmitter to output video data and instructs an audio HDMI transmitter to output audio data in the case where the audio data separated from supplied AV data is 5.1 channel audio streaming data.

Further, Japanese Patent Application Laid-open No. 2011-176526 discloses a communication apparatus (AV amplifier) including a primary HDMI output terminal and one or more secondary HDMI output terminals. Through the primary HDMI output terminal, control is preferentially performed with another apparatus (other apparatuses) connected to one or more HDMI input terminals. The communication apparatus can notify another apparatus connected to the secondary HDMI output terminal of the function of the other apparatus(es) connected to the one or more HDMI input terminals as a function of the communication apparatus via a CEC (Consumer Electronics Control) line.

Specifically, the communication apparatus functions as an HDMI repeater. The communication apparatus notifies an HDMI sink device connected to the secondary HDMI output terminal of a logical address of an HDMI source device connected to the HDMI input terminal as a logical address of the communication apparatus, to cause the sink device to recognize the source device.

### Summary

In the case where a video and an audio are separately output from two HDMI output terminals, the following prerequisites are met: an input source of a connection destination device is set as a connection source device; and the power of the connection destination device is turned on.

However, in the technique disclosed in Japanese Patent Application Laid-open No. 2007-258867 above, the case where the prerequisites as described above are not met is not taken into consideration. So, in the case where the input source of the connection destination device is set as another device or the case where the power of the connection destination device is turned off, it is necessary for a user to make a setting operation manually in order to meet the prerequisites described above.

Further, the technique disclosed in Japanese Patent Application Laid-open No. 2011-176526 above provides a system configuration on the assumption that an HDMI repeater device is provided, and therefore the technique is not applied to a source device such as a player. In addition, in the above technique, complicated internal processing for virtually using a logical address of the source device as an address of the repeater device is necessary, and such processing may not be handled with a controller having relatively low functionality, such as a controller mounted to a player. In such a case, an expensive controller with relatively high functionality is necessary for the above-mentioned processing, which increases costs.

In view of the circumstances as described above, it is desirable to provide an information processing apparatus, an information processing method, and a program that are capable of separately outputting a video and an audio through two output terminals without performing complicated internal processing and without causing a user to perform troublesome operations.

According to an embodiment of the present disclosure, there is provided an information processing apparatus including a first output terminal, a second output terminal, and a controller. The first output terminal is connected to a first control bus capable of bi-directionally transmitting a control signal and configured to output a baseband video signal and a baseband audio signal. The second output terminal is connected to a second control bus capable of bi-directionally transmitting the control signal and configured to output the baseband video signal and the baseband audio signal. The controller is configured to execute a separation output mode in which, of the video signal and the audio signal, the video signal is output from the first output terminal and the audio signal is output from the second output terminal. Further, the controller is configured to exclusively control a valid state and an invalid state of the first control bus and the second control bus. Furthermore, the controller is configured, in a case where a user instructs an execution of the separation output mode, to transmit a first control signal to a first device connected to the first output terminal in a valid state of the first control bus, the first control signal allowing the first device to output the video signal. Moreover, the controller is configured to transmit a second control signal to a second device connected to the second output terminal in a valid state of the second control bus, the second control signal allowing the second device to output the audio signal.

With this configuration, the information processing apparatus exclusively controls the two control buses connected to the two respective output terminals. As a result, it is possible to separately output a video and an audio through the two output terminals without performing complicated internal processing and without causing a user to perform troublesome operations.

Each of the first output terminal and the second output terminal may include an HDMI (High-Definition Multimedia Interface) output terminal, and each of the first control bus and the second control bus may include a CEC (consumer electronics control) bus.

Further, each of the first output terminal and the second output terminal may include an MHL (Mobile High-definition Link) output terminal. In this case, the first control bus and the second control bus can achieve the same control function as that of the CEC bus.

The controller may be configured to designate a physical address of the second device and transmit a "System Audio Mode Request" command to the second device via the second control bus.

Accordingly, the information processing apparatus can make a setting such that an audio signal output from the information processing apparatus is output to only the input of the second device, without affecting an input status of another device (for example, first device) connected to the second device.

The second control bus may have a predetermined physical address assigned as an initial value in advance. In this case, the controller may be configured to transmit the second control signal by using the assigned predetermined physical address.

Accordingly, the information processing apparatus can exchange a control signal with the second device by using the physical address that is set as an initial value even when a physical address is not acquired from EDID (Extended Display Identification Data) due to the power-off of the second device connected to the second output terminal or the power-off of an HPD (Hop Plug Detect) function between the second device and the information processing apparatus.

The controller may acquire, of a plurality of logical addresses obtainable in accordance with a type of the information processing apparatus, a logical address having a largest value as a logical address used for communication through the second control bus.

Accordingly, when a logical address with the largest value is acquired out of obtainable logical addresses, even in the case where devices of the same type as the information processing apparatus are connected to the second device, a probability that logical addresses of those devices and that of the information processing apparatus overlap each other is reduced. Therefore, the information processing apparatus can eliminate retry processing as much as possible and shorten time for the logical address acquisition processing. More specifically, in the case where the information processing apparatus is a playback device according to the HDMI standard, three logical addresses of "4", "8", and "11" are obtainable. The information processing apparatus is adapted to acquire the logical address "11" of those logical addresses.

The controller may be configured to execute transmission processing of the first control signal and the second control signal again via the first control bus and the second control bus in a case where an operation corresponding to a "One Touch Play" command is input into the information processing apparatus.

Accordingly, in the case where an input path of the second device is switched to anther device connected to the second device due to a CEC command (for example, "One Touch Play") supplied from the other device, even if an operation corresponding to a "One Touch Play" command is input into the information processing apparatus, the information processing apparatus can execute again a sequence necessary for setting the separation output mode, to thereby easily restore the setting status.

According to another embodiment of the present disclosure, there is provided an information processing method including: in a case where a user instructs an execution of a separation output mode in which, of a baseband video signal and a baseband audio signal, the baseband video signal is output from a first output terminal that is connected to a first control bus capable of bi-directionally transmitting a control signal and configured to output the baseband video signal and the baseband audio signal, and the baseband audio signal is output from a second output terminal that is connected to a second control bus capable of bi-directionally transmitting the control signal and configured to output the baseband video signal and the baseband audio signal, exclusively controlling a valid state and an invalid state of the first control bus and the second control bus; transmitting a first control signal to a first device connected to the first output terminal in a valid state of the first control bus, the first control signal allowing the first device to output the video signal; and transmitting a second control signal to a second device connected to the second output terminal in a valid state of the second control bus, the second control signal allowing the second device to output the audio signal.

According to another embodiment of the present disclosure, there is provided a program causing an information processing apparatus to execute: in a case where a user instructs an execution of a separation output mode in which, of a baseband video signal and a baseband audio signal, the baseband video signal is output from a first output terminal that is connected to a first control bus capable of bi-directionally transmitting a control signal and configured to output the baseband video signal and the baseband audio signal, and the baseband audio signal is output from a second output terminal that is connected to a second control bus capable of bi-directionally transmitting the control signal and configured to output the baseband video signal and the baseband audio signal, exclusively controlling a valid state and an invalid state of the first control bus and the second control bus; transmitting a first control signal to a first device connected to the first output terminal in a valid state of the first control bus, the first control signal allowing the first device to output the video signal; and transmitting a second control signal to a second device connected to the second output terminal in a valid state of the second control bus, the second control signal allowing the second device to output the audio signal.

As described above, according to the present disclosure, it is possible to separately output a video and an audio through two output terminals without performing complicated internal processing and without causing a user to perform troublesome operations.

These and other objects, features and advantages of the present disclosure will become more apparent in light of the following detailed description of best mode embodiments thereof, as illustrated in the accompanying drawings.

### Brief Description of Drawings

Fig. 1 is a block diagram showing a hardware configuration of a Blu-ray disc player (BDP) according to an embodiment of the present disclosure;
Fig. 2 is a diagram showing a system configuration example assumed in the embodiment of the present disclosure;
Fig. 3 is a diagram showing another system configuration example assumed in the embodiment of the present disclosure;
Fig. 4 is a diagram showing another system configuration example assumed in the embodiment of the present disclosure;
Fig. 5 is a diagram showing a basic configuration of data transmission/reception processing performed between an HDMI (High-Definition Multimedia Interface) source device (BDP) and an HDMI sink device;
Fig. 6 is a sequence diagram showing a flow of operations in an audiovisual separation output mode in the BDP; and
Figs. 7A, 7B, 7C, and 7D are diagrams each showing a hardware configuration example to achieve exclusive control of two CEC (Consumer Electronics Control) buses.

### Detailed Description of Embodiments

Hereinafter, an embodiment of the present disclosure will be described with reference to the drawings.

### (Hardware Configuration of BDP)

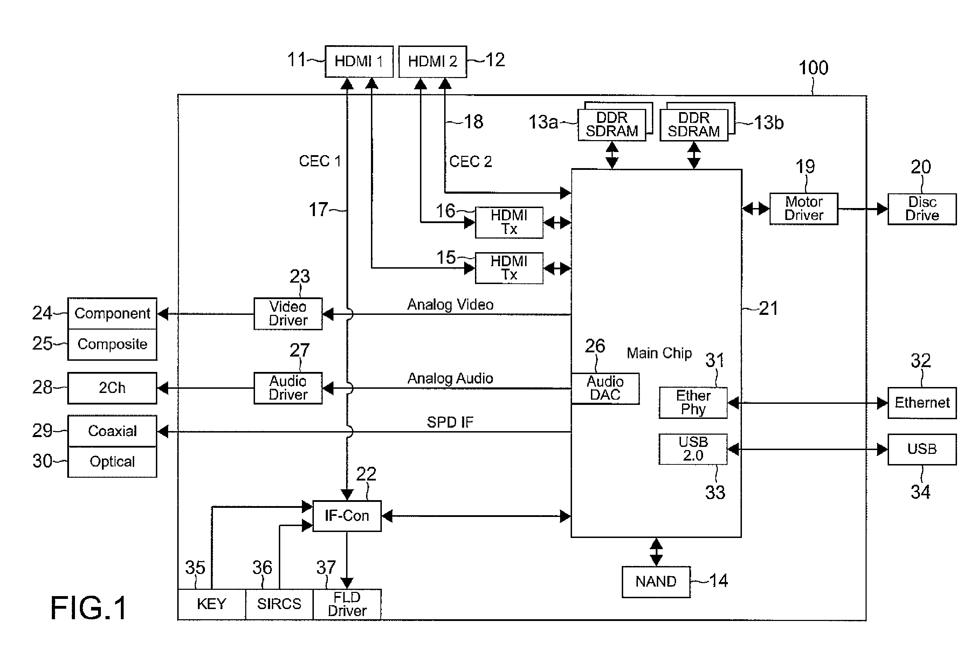

Fig. 1 is a block diagram showing a hardware configuration of a Blu-ray disc player (BDP) according to an embodiment of the present disclosure.

As shown in Fig. 1, a BDP 100 includes a main chip (system controller) 21, an interface controller (IF controller) 22, a DDR SDRAM (Double-Data-Rate Synchronous Dynamic Random Access Memory) 13, a NAND flash memory 14, two HDMI (High-Definition Multimedia Interface) transmitters 15 and 16, and two HDMI output terminals 11 and 12.

The main chip 21 accesses the DDR SDRAM 13, the NAND flash memory 14, and the like when necessary and performs overall control of whole blocks of the BDP 100 while performing various types of computation processing.

Further, in an audiovisual (AV) separation output mode to be described later, the main chip 21 works in cooperation with the IF controller 22 to execute exclusive control processing of a CEC (Consumer Electronics Control) bus 17 connected to the HDMI output terminal 11 and a CEC bus 18 connected to the other HDMI output terminal 12. In the exclusive control processing, the main chip 21 takes charge of CEC processing using the CEC bus 18 connected to the HDMI output terminal 12.

The IF controller 22 is connected to interfaces such as a key/switch 35, an infrared port 36, and an FLD driver 37 and controls those interfaces. The key/switch 35 receives various operations of a user to the BDP 100. The infrared port 36 receives an operation signal via a remote controller.

Further, the IF controller 22 controls transmission/reception processing of a CEC command by using the CEC buses 17 and 18 and works in cooperation with the main chip 21 to execute the exclusive control processing of the CEC bus 17 and the CEC bus 18. In the exclusive control processing, the IF controller 22 takes charge of CEC processing using the CEC bus 17 connected to the HDMI output terminal 11.

In this embodiment, of the two CEC buses 17 and 18, the CEC bus 17 is used as a main bus and the CEC bus 18 is used as a sub-bus. In modes other than the AV separation output mode to be described later, only the CEC bus 17 is used and the CEC bus 18 is set to be in an invalid state.

In addition, the main chip 21 includes an audio DAC (Digital to Analog Converter) 26, an Ethernet PHY (Physical Layer) chip 31, and a USB (Universal Serial Bus) controller 33.

The audio DAC 26 converts a digital audio signal, which is read from an optical disc (Blu-ray disc etc.) mounted to the optical disc drive 20, into an analog audio signal and transmits the analog audio signal to an audio driver 27. The audio driver 27 outputs the converted analog audio signal as a two-channel stereo signal from an audio output unit 28.

Further, the video driver 23 outputs a video signal, which is read from the optical disc and converted from a digital form into an analog form by the main chip 21, from a component video terminal 24 or a composite video terminal 25.

Additionally, the BDP 100 includes an SPD (Sony Philips Digital) interface. The SPD interface is capable of outputting any digital audio data such as Dolby Digital, Digital Theater Systems, and Advanced Audio Coding via a coaxial digital audio terminal 29 or an optical digital audio terminal 30.

The Ethernet PHY chip 31 is connected to an Ethernet terminal 32 and executes D/A conversion processing or the like of data to be transmitted to another device via the Ethernet terminal 32 and an Ethernet cable (not shown) connected to the Ethernet terminal 32.

The USB controller 33 is connected to a USB terminal 34 and controls transmission/reception processing of data via the USB terminal 34 according to the USB 2.0 standard, for example.

The DDR SDRAM 13 functions as a main memory serving as a work area of the main chip 21 and temporarily stores an OS, various applications in execution, and various types of data being processed (video data, audio data, and the like). Two DDR SDRAMs 13 (13a, 13b) are provided, for example, but the number of DDR SDRAMs 13 is not limited thereto.

The NAND flash memory 14 fixedly stores data such as the OS to be executed by the main chip 21 and firmware including various parameters and programs such as software modules.

The HDMI transmitter 15 is connected to the HDMI output terminal 11 and transmits a baseband video signal and audio signal to another device via the HDMI output terminal 11 under the control of the main chip 21.

The HDMI transmitter 16 is connected to the HDMI output terminal 12 and transmits a baseband video signal and audio signal to another device via the HDMI output terminal 12 under the control of the main chip 21.

Further, a motor driver 19 is also connected to the main chip 21. The motor driver 19 is connected to the optical disc drive 20 and controls a drive of a spindle motor of the optical disc drive 20 in reproduction of an optical disc mounted to the optical disc drive 20.

### (System Configuration Example)

In this embodiment, the BDP 100 is capable of executing an AV separation output mode, in which video signals and audio signals are separated from each other for two HDMI output terminals, and only video signals are output from one of the two HDMI output terminals, that is, the HDMI output terminal 11, and only audio signals are output from the other HDMI output terminal 12.

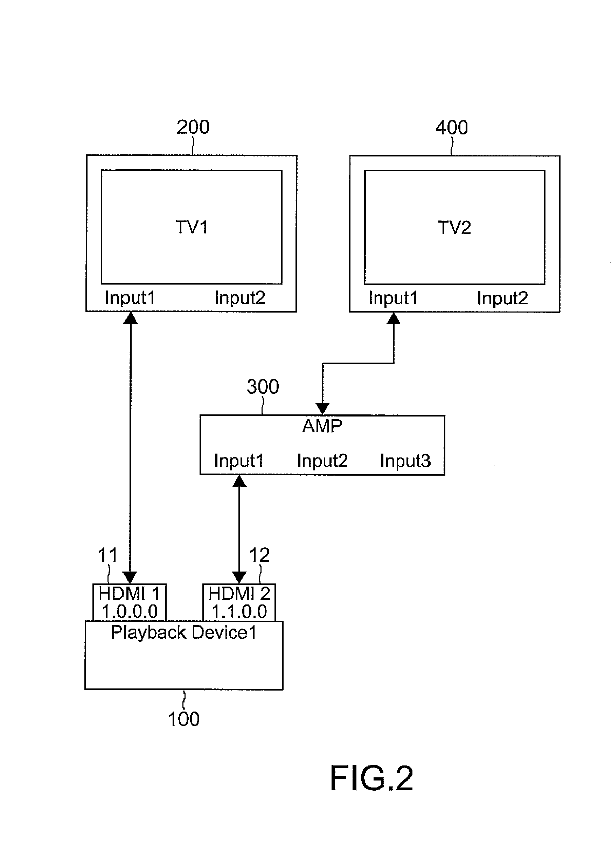

Figs. 2, 3, and 4 are diagrams each showing a system configuration example that is assumed in the case where the AV separation output mode is executed.

In the example shown in Fig. 2, an input 1 of a TV (television) 200 is connected to the one HDMI output terminal 11 of the BDP 100, and an input 1 of an amplifier 300 is connected to the other HDMI output terminal 12. In this example, in the AV separation output mode, a video signal output from the HDMI output terminal 11 is output from a display of the TV 200. An audio signal output from the HDMI output terminal 12 is amplified in the amplifier 300 and then output from a speaker of the amplifier 300 or output to the TV 400 and then output from a speaker of the TV 400.

Here, according to the HDMI standard, the BDP 100 is classified into a "playback device" as a source device, the TV 200 is classified into a "TV" as a sink device, and the amplifier 300 is classified into an "audio system" as a repeater device.

As will be described later, a physical address [1.0.0.0] is assigned to the HDMI output terminal 11 of the BDP 100, and a physical address [1.1.0.0] is assigned to the HDMI output terminal 12 of the BDP 100.

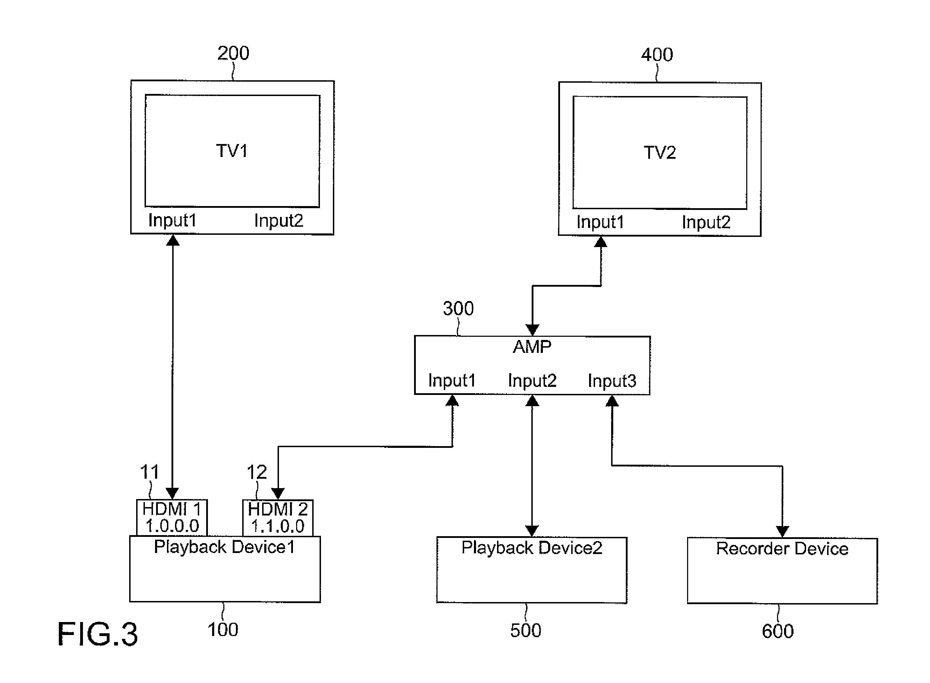

In the example shown in Fig. 3, devices connected to the BDP 100 are the same as those in the case of Fig. 2. However, in addition to the BDP 100, another BDP 500 and a BDR (Blu-ray Disc Recorder) 600 are also connected to the amplifier 300 at an input 2 and an input 3 of the amplifier 300, respectively.

The amplifier 300 can selectively switch an input between the BDP 100, the BDP 500, and the BDR 600 that are connected to the amplifier 300 to output an input signal to the TV 400.

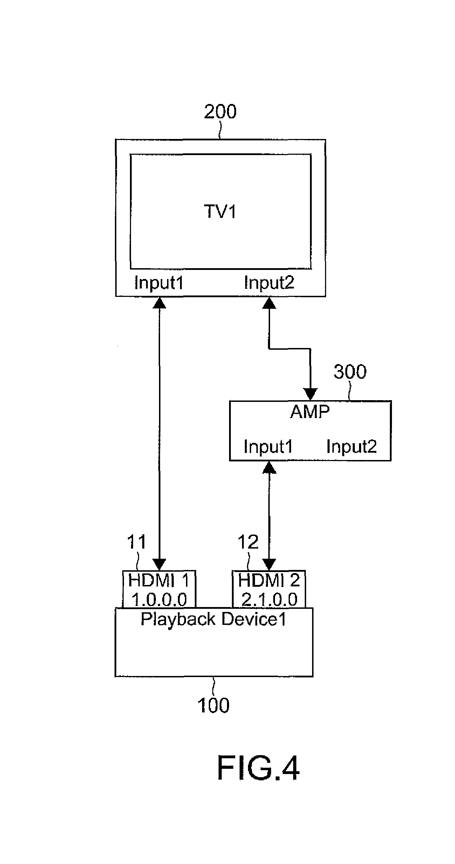

In the example shown in Fig. 4, a TV as a sink device in the system is only the TV 200, unlike the examples of Figs. 2 and 3. That is, the BDP 100 and the amplifier 300 are connected to the TV 200. In this case, in the AV separation output mode, a video signal output from the one HDMI output terminal 11 of the BDP 100 is output from the TV 200, and an audio signal output from the other HDMI output terminal 12 is amplified in the amplifier 300 and then output from a speaker of the amplifier 300 or output from a speaker of the TV 200.

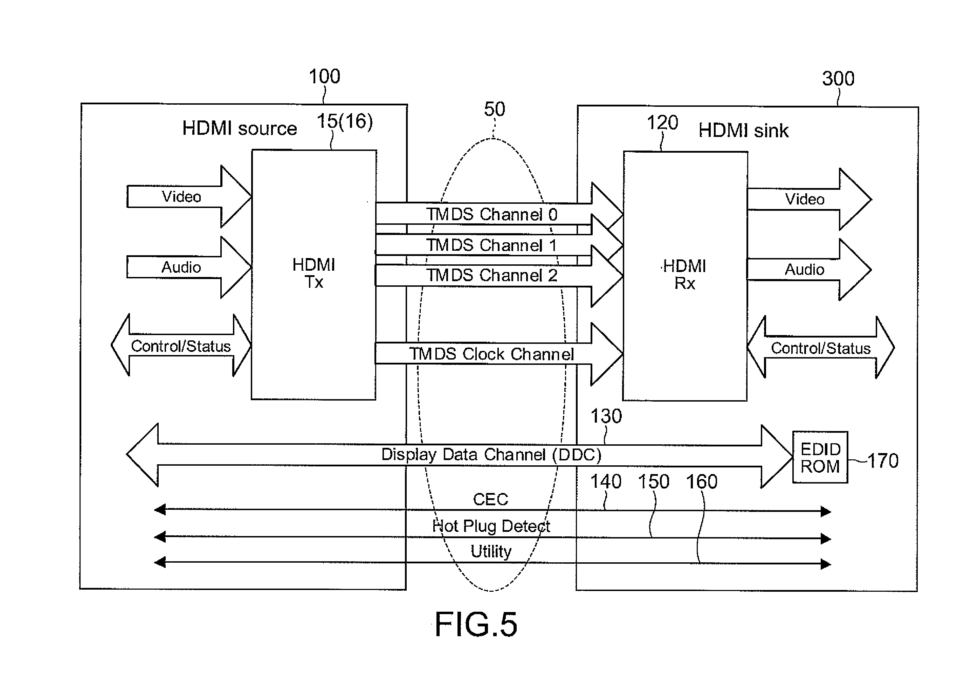

Fig. 5 is a diagram showing a basic configuration of data transmission/reception processing performed between an HDMI source device (BDP 100) and an HDMI sink device.

As shown in Fig. 5, to correspond to the HDMI transmitter 15 (16) of the BDP 100, the HDMI sink device (TV 200 etc.) or the HDMI repeater device (amplifier 300 etc.) includes an HDMI receiver 120. A video signal, an audio signal, and a clock signal thereof are transmitted in one direction from the HDMI transmitter 15 via an HDMI cable 50, and the HDMI receiver 120 receives those signals. For transmission of those signals, TMDS (transition minimized differential signaling) channels 0 to 2 and a TMDS clock channel in a TMDS system are used.

A DDC (Display Data Channel) 130 is used when the BDP 100 as a source device reads E-EDID (Enhanced Extended Display Identification Data) from a sink device such as the TV 200 or from a repeater device such as the amplifier 300. Examples of the E-EDID includes profile information in a video/audio form, such as RGB (Red/Green/Blue), YCbCr 4:4:4, and YCbCr 4:2:2, which can be handled by the sink device or the repeater device. The TV 200 as a sink device or the amplifier 300 as a repeater device includes an EDIDROM (EDID ROM) 170 that stores the E-EDID described above. Though not shown in the figure, the BDP 100 as a source device can also store the E-EDID and transmit the E-EDID to the sink device or the repeater device as appropriate, like the sink device or the repeater device.

A CEC line 140 is used to perform bi-directional communications of control data between the BDP 100 as a source device and the TV 200 as a sink device or the amplifier 300 as a repeater device. The CEC line 140 is connected to the CEC bus 17 via the HDMI output terminal 11 of the BDP 100 and connected to the CEC bus 18 via the HDMI output terminal 12 of the BDP 100.

A HPD (Hot Plug Detect) line 150 is used for the BDP 100 as a source device to detect whether a sink device or a repeater device is connected or not. Further, the HPD line 150 is also used as a HEAC- (HDMI Ethernet and Audio return Channel) line that constitutes a bi-directional communication path.

A utility line 160 is used as a HEAC+ line that constitutes the bi-directional communication path together with the HPD line 150.

### (Operation of BDP)

Next, operations of the BDP 100 in the system configured as described above will be described. In this embodiment, operations of the BDP 100 are performed by the main chip 21, the IF controller 22, the HDMI transmitters 15 and 16, and software executed under the control of those components in cooperation with one another.

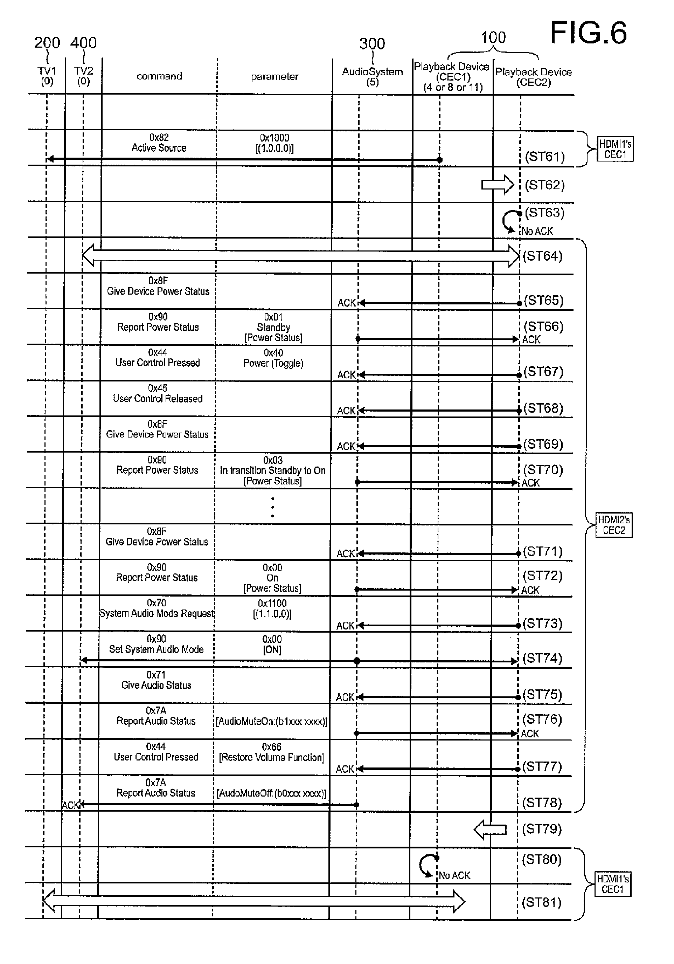

Fig. 6 is a sequence diagram showing a flow of operations (CEC processing) in the AV separation output mode in the BDP 100.

Prior to the flow showing Fig. 6, the BDP 100 receives an operation for giving instruction to execute the AV separation output mode from a user. For example, the operation includes an operation of a user selecting a menu or an icon corresponding to the AV separation output mode from a menu screen displayed on the TV 200 connected to the BDP 100, an operation of pressing a hardware button (not shown) of the BDP 100, and the like, but the operation is not limited thereto.

Upon instruction of the execution of the AV separation output mode, the main chip 21 of the BDP 100 makes a setting such that a video signal is output from the HDMI output terminal 11 (HDMI transmitter 15) and an audio signal is output from the HDMI output terminal 12 (HDMI transmitter 16), irrespective of the statuses of devices connected to the two HDMI output terminals 11 and 12.

Subsequently, the IF controller 22 of the BDP 100 uses the CEC bus 17 to transmit an "Active Source" command from the HDMI output terminal 11 to the TV 200 by broadcasting (Step 61). Upon reception of the "Active Source" command, the TV 200 sets the BDP 100 serving as a transmission source of the command as an input path.

Subsequently, the main chip 21 transmits an exclusive control command to the IF controller 22. The exclusive control command is a request to put the CEC bus 17 connected to the HDMI output terminal 11 into an internally invalid state. Upon reception of the exclusive control command, the IF controller 22 puts the CEC bus 17 into an internally invalid state. At the same time, the main chip 21 puts the CEC bus 18 connected to the HDMI output terminal 12 into a valid state (Step 62).

Subsequently, the main chip 21 acquires a physical address and a logical address that are necessary for CEC operations using the CEC bus 18 (Step 63).

For the HDMI output terminal 12 (CEC bus 18) of the BDP 100, at the time of manufacturing thereof, a physical address [1.1.0.0] is set in advance as an initial value. Therefore, the main chip 21 can recognize its own physical address even in the case of having a difficulty in referring to a physical address storage area of EDID of a connection destination device (amplifier 300). Accordingly, even in the case where the power of the amplifier 300 connected to the HDMI output terminal 12 is turned off or where the HPD line 150 between the BDP 100 and the amplifier 300 is electrically disconnected and thus a physical address is not acquired from the EDID, the BDP 100 can execute the CEC processing between the BDP 100 and the amplifier 300.

The main chip 21 acquires a logical address after setting the physical address. Here, in HDMI-CEC processing in related art, polling messages are transmitted to a plurality of logical addresses that are assigned in accordance with types of devices in the order from an address with the smallest value, and an address from which an ACK is not returned in response thereto is determined as an address to be used. For example, three logical addresses of "4" (Playback Device 1), "8" (Playback Device 2), and "11" (Playback Device 3) are usable for a playback device such as the BDP 100. A playback device in related art sequentially executes addressing from the logical address "4".

In this embodiment, however, the main chip 21 sequentially executes addressing from the logical address "11" (Playback Device 3) with the largest value in the three addresses described above, inversely with the related art. In the case where no ACK is transmitted from another device in response to the polling message associated with the logical address "11", the main chip 21 sets the logical address "11" as its own logical address (Step 63).

Accordingly, for example, even in the case where source devices of the same type as the BDP 100 are connected to the amplifier 300 as in the system configuration example shown in Fig. 3, a probability that logical addresses of those source devices and that of the BDP 100 overlap each other is reduced. Therefore, the BDP 100 can eliminate retry processing in logical address acquisition processing as much as possible, shorten time for the logical address acquisition processing, and minimize the influence on the other source devices.

Subsequently, the main chip 21 executes CEC processing (for example, processing of notifying another device of physical address) that is the same processing as in related art and is performed after the acquisition of the physical address and the logical address (Step 64).

Subsequently, the main chip 21 transmits a "Give Device Power Status" command to the amplifier 300 through the CEC bus 18 in order to investigate a power status of the amplifier 300 (Step 65).

It is assumed here that the power-off of the amplifier 300 (Standby) is notified by a reply command of "Report Power Status" transmitted from the amplifier 300 in response to the "Give Device Power Status" command (Step 66). In this case, the main chip 21 transmits a "User Control Pressed" command and a "User Control Released" command to the amplifier 300 through the CEC bus 18 in order to turn on the power of the amplifier 300 (Steps 67 and 68).

Additionally, the main chip 21 repeatedly transmits the "Give Device Power Status" command and receives the "Report Power Status" command in response thereto until the power-on of the amplifier 300 is actually confirmed (Steps 69 to 72).

In the case where the power of the amplifier 300 is turned on, the main chip 21 transmits a "System Audio Mode Request" command to the amplifier 300 through the CEC bus 18 (Step 73).

The "System Audio Mode Request" command is for causing the amplifier 300 to switch the audio input path to the BDP 100 so that the amplifier 300 enters a state capable of outputting an audio that is output from the HDMI output terminal 12 of the BDP 100.

Here, in the case where only the switching of the audio input path of the amplifier 300 to the HDMI output terminal 12 of the BDP 100 is taken into consideration, for example, an "Active Source" command may be used instead of the "System Audio Mode Request" command described above. However, the "Active Source" command is a broadcasting command. Therefore, in the system configuration example as shown in Fig. 4, for example, the "Active Source" command is received by the TV 200 as well and a video input path of the TV 200 is also switched to the HDMI output terminal 12 of the BDP 100. In such a case, a situation in which a video signal output from the HDMI output terminal 11 is not displayed in the TV 200 occurs. In this embodiment, the use of the "System Audio Mode Request" command prevents such a situation from occurring.

In other words, with this "System Audio Mode Request" command, a physical address [1.1.0.0] of the BDP 100 serving as a switching destination of the audio input path is set as a parameter. However, this command is a command to be transmitted to only the amplifier 300, and therefore another device is not allowed to read this command. As a result, the transmission of this command from the BDP 100 to the amplifier 300 enables only the input path of the amplifier 300 to be selected so as to output an audio signal supplied from the BDP 100 without affecting an input status of another device connected to the amplifier 300.

The amplifier 300 that has received the "System Audio Mode Request" command broadcasts an audio output status "ON" by a "Set System Audio Mode" command to notify another device of the output of an audio from the amplifier 300 (Step 74).

Subsequently, the main chip 21 transmits a "Give Audio Status" command to the amplifier 300 through the CEC bus 18 in order to investigate an audio output status of the amplifier 300 (Step 75).

The "Give Audio Status" command is for coping with a case of using the amplifier 300 corresponding to a version before an HDMI version 1.3, in which muting is not automatically controlled even if the amplifier 300 switches speaker output. At that time, the main chip 21 confirms the status such that muting is not inverted even if the amplifier corresponds to a version 1.4 (self-muting control).

That is, the main chip 21 receives a "Report Audio Status" command from the amplifier 300 and confirms a mute state (Step 76).

In the case where it is found by the "Report Audio Status" command that the amplifier 300 is in the mute state, the main chip 21 transmits a "User Control Pressed" command whose parameter is "Restore Volume Function" to the amplifier 300 through the CEC bus 18, to reset the mute state of the amplifier 300 (Step 77). In the case where the mute state is reset, the amplifier 300 notifies the TV 400 connected to the amplifier 300 of the reset by a "Report Audio Status" command whose parameter is "Audio Mute Off" (Step 78).

Then, after confirming the reset of the mute state of the amplifier 300, the main chip 21 puts the CEC bus 18 connected to the HDMI output terminal 12 into an internally invalid state and transmits an exclusive control command to request the IF controller 22 to put the CEC bus 17 connected to the HDMI output terminal 11 into a valid state. The IF controller 22 receives the exclusive control command and restores the CEC bus 17 to an internally valid state (Step 79).

Subsequently, the IF controller 22 acquires a physical address and a logical address that are necessary for the CEC operations using the CEC bus 17 as in Step 63 above (Step 80).

Then, the IF controller 22 executes CEC processing that is the same processing as in related art and is performed after the acquisition of the physical address and the logical address as in Step 64 above (Step 81).

Through the above processing, the following state can be obtained: the TV 200 connected to the HDMI output terminal 11 displays a video supplied from the BDP 100, and the amplifier 300 connected to the HDMI output terminal 12 outputs an audio supplied from the BDP 100 from a speaker thereof.

### (Processing on One Touch Play Command)

After the TV 200 and the amplifier 300 are put into a state where the AV separation output mode can be executed by the processing described above, in the case where a CEC command, for example, a command such as "One Touch Play" is issued from another source device, there is a probability that the audio input path of the amplifier 300 is switched to the other source device.

However, in the case where the AV separation output mode function is turned on and when a button with which a "One Touch Play" command is normally issued, such as a PLAY button, a HOME button, and a DISPLAY button, is pressed with a remote controller of the BDP 100, a hardware key of the BDP 100, and the like, the BDP 100 executes the CEC sequence shown in Fig. 6 again.

Therefore, even in the case where the audio input path of the amplifier 300 is switched to the other source device as described above, the user can easily restore the setting in a period of time during which the AV separation output mode is turned on.

### (Hardware Configuration Example for Exclusive Control of CEC Bus)

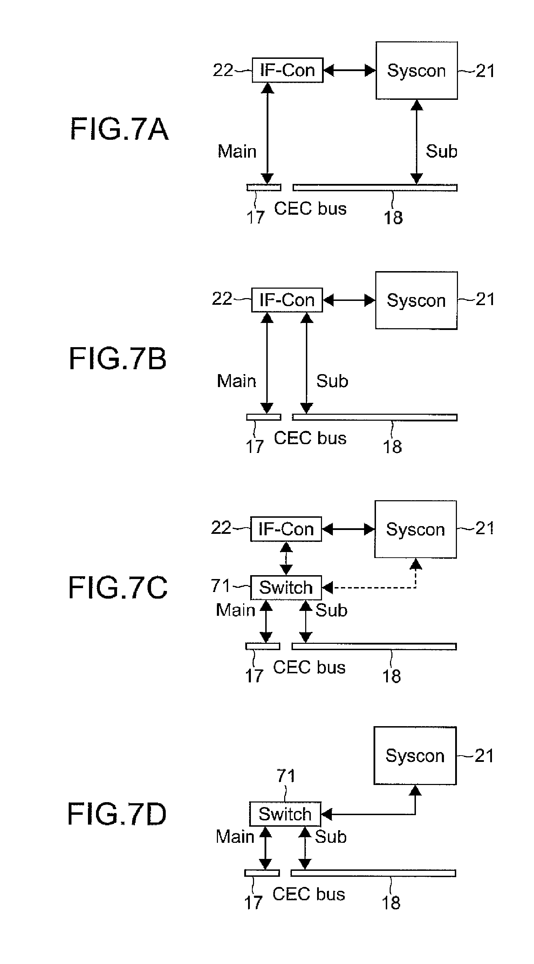

Figs. 7A to 7D are diagrams each showing a hardware configuration example for achieving the exclusive control of the two CEC buses 17 and 18.

The configuration example of Fig. 7A is a simplified configuration based on Fig. 1. That is, in this configuration, the CEC bus 18 is connected to the main chip (system controller) 21, and the CEC bus 17 is connected to the IF controller 22. Each of the main chip 21 and the IF controller 22 handles a CEC command thereof. At the same time, the main chip 21 and the IF controller 22 exchange an exclusive control command for the CEC bus therebetween (for example, from the system controller 21 to the IF controller 22).

In the configuration example of Fig. 7B, both the two CEC buses 17 and 18 are connected to the IF controller 22. The IF controller 22 performs exclusive control on the CEC buses 17 and 18 based on an exclusive control command supplied from the system controller 21 and handles CEC commands of the CEC buses 17 and 18.

In the configuration example of Fig. 7C, the CEC buses 17 and 18 are connected to a hardware switch 71 connected to the IF controller 22. In this configuration example, the system controller 21 instructs the IF controller 22 to change settings of the hardware switch 71, to achieve exclusive control of the two CEC buses 17 and 18. Further, the IF controller 22 handles the CEC commands corresponding to the respective CEC buses under the control of the system controller 21.

In the configuration example of Fig. 7D, the IF controller 22 is not used for the exclusive control processing of the CEC buses 17 and 18. The CEC buses 17 and 18 are subjected to exclusive control with use of the hardware switch 71 connected to the system controller 21. Further, the CEC commands corresponding to the respective CEC buses are also handled by the system controller 21.

That is, the exclusive control processing of the two CEC buses 17 and 18 can also be performed by addition of the economical hardware switch 71 as shown in Figs. 7C and 7D.

### (Conclusion)

As described above, in this embodiment, the BDP 100 exclusively controls the two CEC buses 17 and 18, with the result that the control on a connection destination device, which is necessary in the AV separation output mode, can be automatically performed. Therefore, a user can easily enjoy the AV separation output mode without being conscious of setting processing of a connected device, which is troublesome but necessary to execute the AV separation output mode.

Further, the exclusive control processing enables function enhancement in which costs of hardware are suppressed at the minimum. In other words, in a BDP of model having a hardware configuration like many low-end models, the use of the exclusive control according to the embodiment of the present disclosure allows function enhancement to be achieved even in a small microcomputer that controls only one CEC system.

### (Modified Example)

The present disclosure is not limited to the embodiment described above and may be variously modified without departing from the gist of the present disclosure.

In the embodiment described above, the example in which the embodiment of the present disclosure is applied to the BDP has been described. However, the present disclosure may also be achieved in other HDMI source devices such as a recorder, a media player, and a STB (Set Top Box). Additionally, the present disclosure is also applicable to a case where a complex machine including a source device, such as an AV system, includes a plurality of HDMI output terminals.

In the embodiment described above, the two HDMI output terminals are provided to the BDP, but three or more HDMI output terminals may be provided.

In the embodiment described above, CEC commands that are necessary in the exclusive control processing of the two CEC buses are not limited to the commands shown in Fig. 6. For example, a unique CEC command that is not defined in the HDMI standard may be used.

In the embodiment described above, the example in which the embodiment of the present disclosure is applied to the HDMI has been described. However, the present disclosure may be applied to any system such as an MHL (Mobile High-definition Link) as long as the system enables the same control as that of the CEC and uses position information like the physical address described above. In this case, a device to which an embodiment of the present disclosure is applied is assumed to be various devices other than the HDMI source device described above, such as mobile devices including a smartphone.

### (Others)

The present disclosure may also take the following configurations.
(1) An information processing apparatus, including:
   a first output terminal that is connected to a first control bus capable of bi-directionally transmitting a control signal and configured to output a baseband video signal and a baseband audio signal;
   a second output terminal that is connected to a second control bus capable of bi-directionally transmitting the control signal and configured to output the baseband video signal and the baseband audio signal; and
   a controller configured
      to execute a separation output mode in which, of the video signal and the audio signal, the video signal is output from the first output terminal and the audio signal is output from the second output terminal,
      to exclusively control a valid state and an invalid state of the first control bus and the second control bus, and
      in a case where a user instructs an execution of the separation output mode, to transmit a first control signal to a first device connected to the first output terminal in a valid state of the first control bus, the first control signal allowing the first device to output the video signal, and to transmit a second control signal to a second device connected to the second output terminal in a valid state of the second control bus, the second control signal allowing the second device to output the audio signal.
(2) The information processing apparatus according to (1), in which
   each of the first output terminal and the second output terminal includes a high-definition multimedia interface output terminal, and
   each of the first control bus and the second control bus includes a consumer electronics control bus.
(3) The information processing apparatus according to (2), in which
   the controller is configured to designate a physical address of the second device and transmit a "System Audio Mode Request" command to the second device via the second control bus.
(4) The information processing apparatus according to (2) or (3), in which
   the second control bus has a predetermined physical address assigned as an initial value in advance, and
   the controller is configured to transmit the second control signal by using the assigned predetermined physical address.
(5) The information processing apparatus according to any one of (2) to (4), in which
   the controller acquires, of a plurality of logical addresses obtainable in accordance with a type of the information processing apparatus, a logical address having a largest value as a logical address used for communication through the second control bus.
(6) The information processing apparatus according to any one of (2) to (5), in which
   the controller is configured to execute transmission processing of the first control signal and the second control signal again via the first control bus and the second control bus in a case where an operation corresponding to a "One Touch Play" command is input into the information processing apparatus.
   The present disclosure contains subject matter related to that disclosed in Japanese Priority Patent Application JP 2012-099215 filed in the Japan Patent Office on April 24, 2012, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus, comprising:
a first output terminal that is connected to a first control bus capable of bi-directionally transmitting a control signal and configured to output a baseband video signal and a baseband audio signal;
a second output terminal that is connected to a second control bus capable of bi-directionally transmitting the control signal and configured to output the baseband video signal and the baseband audio signal; and
a controller configured
to execute a separation output mode in which, of the video signal and the audio signal, the video signal is output from the first output terminal and the audio signal is output from the second output terminal,
to exclusively control a valid state and an invalid state of the first control bus and the second control bus, and
in a case where a user instructs an execution of the separation output mode, to transmit a first control signal to a first device connected to the first output terminal in a valid state of the first control bus, the first control signal allowing the first device to output the video signal, and to transmit a second control signal to a second device connected to the second output terminal in a valid state of the second control bus, the second control signal allowing the second device to output the audio signal.

2. The information processing apparatus according to claim 1, wherein
each of the first output terminal and the second output terminal includes a high-definition multimedia interface output terminal, and
each of the first control bus and the second control bus includes a consumer electronics control bus.

3. The information processing apparatus according to claim 2, wherein
the controller is configured to designate a physical address of the second device and transmit a "System Audio Mode Request" command to the second device via the second control bus.

4. The information processing apparatus according to claim 2 or 3, wherein
the second control bus has a predetermined physical address assigned as an initial value in advance, and
the controller is configured to transmit the second control signal by using the assigned predetermined physical address.

5. The information processing apparatus according to claim 2, 3 or 4, wherein
the controller acquires, of a plurality of logical addresses obtainable in accordance with a type of the information processing apparatus, a logical address having a largest value as a logical address used for communication through the second control bus.

6. The information processing apparatus according to one of the claims 2 to 5, wherein
the controller is configured to execute transmission processing of the first control signal and the second control signal again via the first control bus and the second control bus in a case where an operation corresponding to a "One Touch Play" command is input into the information processing apparatus.

7. An information processing method, comprising:
in a case where a user instructs an execution of a separation output mode in which, of a baseband video signal and a baseband audio signal, the baseband video signal is output from a first output terminal that is connected to a first control bus capable of bi-directionally transmitting a control signal and configured to output the baseband video signal and the baseband audio signal, and the baseband audio signal is output from a second output terminal that is connected to a second control bus capable of bi-directionally transmitting the control signal and configured to output the baseband video signal and the baseband audio signal,
exclusively controlling a valid state and an invalid state of the first control bus and the second control bus;
transmitting a first control signal to a first device connected to the first output terminal in a valid state of the first control bus, the first control signal allowing the first device to output the video signal; and
transmitting a second control signal to a second device connected to the second output terminal in a valid state of the second control bus, the second control signal allowing the second device to output the audio signal.

8. A program causing an information processing apparatus to execute:
in a case where a user instructs an execution of a separation output mode in which, of a baseband video signal and a baseband audio signal, the baseband video signal is output from a first output terminal that is connected to a first control bus capable of bi-directionally transmitting a control signal and configured to output the baseband video signal and the baseband audio signal, and the baseband audio signal is output from a second output terminal that is connected to a second control bus capable of bi-directionally transmitting the control signal and configured to output the baseband video signal and the baseband audio signal,
exclusively controlling a valid state and an invalid state of the first control bus and the second control bus;
transmitting a first control signal to a first device connected to the first output terminal in a valid state of the first control bus, the first control signal allowing the first device to output the video signal; and
transmitting a second control signal to a second device connected to the second output terminal in a valid state of the second control bus, the second control signal allowing the second device to output the audio signal.
